# EUROPÄISCHE PATENTANMELDUNG

(11) **EP 3 967 594 A1**
(43) Veröffentlichungstag der Anmeldung: **16.03.2022**
(21) Anmeldenummer: 20195330.4
(22) Anmeldetag: 09.09.2020
(51) Int. Cl.: B63H 21/32, F01N 5/02, F01N 13/00, F28D 20/02, F02G 5/02, F28D 20/00

(54) **ABWÄRMENUTZUNG VON SCHIFFSVERBRENNUNGSMOTOREN DURCH SPEICHERUNG UND ABGABE AN LAND**

(71) Anmelder: SDC Ship Design & Consult GmbH, 22305 Hamburg (DE)
(72) Erfinder: Freudenberg, Sascha, 22083 Hamburg (DE)
(74) Vertreter: Hauck Patentanwaltspartnerschaft mbB

(57) **Zusammenfassung**

Schiff umfassend mindestens einen als Verbrennungsmotor ausgebildeten Antriebsmotor, mindestens einen Wärmespeicher, eine Einrichtung zum Übertragen von Wärme aus dem Abgas des Antriebsmotors auf den Wärmespeicher und eine Einrichtung zur Abgabe der in dem Wärmespeicher gespeicherten Wärme an Land oder einen anderen Ort außerhalb des Schiffes zur weiteren Nutzung.

## Beschreibung

### Stand der Technik

Verbrennungsmotoren werden auch auf lange Sicht in der Schifffahrt eine zentrale Rolle beim Antrieb spielen. Dabei haben diese Motoren, in der Leistungsgröße, wie sie auf Schiffen gebraucht werden, bekanntermaßen einen Wirkungsgrad (Antriebsleistung/Energieverbrauch) von knapp 50%. Die restliche Energie geht als Wärme verloren, wobei ca. 20% im Kühlwasser und fast 30% mit dem Abgas abgeführt werden. In der Vergangenheit wurde diese Abwärme in erster Linie genutzt, um den Bordbedarf an Wärme zu decken und Frischwasser zu erzeugen. Durch den technischen und regulatorischen Fortschritt hat sich der Bordbedarf an Wärme bei den meisten Schiffstypen aber über die Jahre kontinuierlich verringert. Schweröl, das geheizt werden musste, um pumpfähig zu sein, findet auf Grund gestiegener Umweltanforderungen immer weniger Verwendung. Frischwasser kann, insbesondere bei den kleinen Besatzungen heute, effektiver mit elektrischbetriebenen Umkehrosmoseanlagen erzeugt werden, d.h. Wärme für die Verdampfung wird nicht mehr benötigt. Die Beheizung der Wohnräume kann dank Fancoil-Systemen effektiver und mit geringeren Temperaturniveaus ausgeführt werden.

Aktuelle Schiffsentwürfe, insbesondere von Schiffen in der küstennahen Fahrt, mit kleinen Besatzungen und kurzen Strecken, können den Bordbedarf an Wärme deshalb komplett aus dem Kühlwasser heraus decken. Werden dabei auch die Hilfsdiesel konsequent in die Abwärmenutzung des Kühlwassers eingebunden, kann, aus Sicht des Bordbetriebes, nicht nur auf einen Abgaskessel, sondern auch auf einen Heizkessel verzichtet werden. Dies vereinfacht die Konstruktion wesentlich und spart Investmentkosten. Es bedeutet aber zugleich, dass knapp ein Drittel der Energie (die Wärme im Abgas) im Betrieb, noch dazu der Teil mit dem höchsten Temperaturniveau, also dem größten Potential zur Abwärmenutzung, ungenutzt bleibt.

Diese Tatsache wird sich zukünftig noch verschärfen, da alternative Kraftstoffe wie Erdgas, Methanol oder Wasserstoff, die den herkömmlichen Dieselkraftstoff zumindest teilweise in den Verbrennungsmotoren verdrängen werden, das nutzbare Temperaturniveau nochmals deutlich anheben werden.

Die bisherigen Bemühungen der Schiff- und Schiffsmaschinenbauer, diese überschüssige Wärme zu nutzen richten sich darauf, die vorhandene Abwärme in andere Energieformen zu wandeln, welche an Bord genutzt werden könnten. Beispiele dafür sind EP 30 51 111 B1, KR 20130137936 A, KR 20120126890 A oder das WHRS von MAN:
https://mandieselturbo.com/docs/librariesprovider6/technical-papers/waste-heatrecovery-system.pdf

Dieses versucht die Abwärme zur Erzeugung von Dampf zu nutzen, mit dem über einen Turbinengenerator letztlich Strom generiert werden soll. Dieses System rechnet sich aber erst für Motorenleistungen deutlich über 15MW und ist damit für typische Schiffe in Küstenfahrt nicht anwendbar. Dies trifft in gleicher Weise auf die Systementwicklung der Firma Echogen zu:
https://www.echogen.com/our-solution/product-series/eps100/

Bei der als Wärmeträgermedium CO2, statt der, im Schiffbau üblichen Medien Dampf oder Thermalöl genutzt wird. Dieses als Organic Ranking Cycle-bezeichnete Verfahren hat dennoch Potential zur Abwärmenutzung auch bei kleineren Motoren, wie das Beispiele der Orcan Energy zeigt:
https://www.orcan-energy.com/en/applications-marine.html

Bisherige Versuche des Anmelders, solche Systeme auf Schiffen in der Küstenfahrt mit kleinen Maschinenleistungen (<4MW) auf kommerzieller Basis zu etablieren zeigten jedoch regelmäßig, dass die Effizienz der Systeme nicht ausreicht, die Investitionskosten in einem annehmbaren Zeitraum zu amortisieren. Auch stellen OCR-Anlagen sehr spezifische Forderungen an das Temperaturniveau.

Ein anderer Weg ist die Umwandlung der überschüssigen Wärme in Kälte mit Hilfe von Absorptionskälteanlagen, z.B. CN 201246920UY, CN 1527012 A, KR 20120025664 A oder:
https://heinenhopman.com/heinen-and-hopman/pdfs-gecomprimeerd/hh-maritime-absorption-chiller.pdf

Diese Anlagen sind jedoch nur sehr träge regelbar und daher nur dort sinnvoll einzusetzen, wo sie eine erhebliche Grundlast an Kältebedarf decken sollen und Lastspitzen durch den parallelen Betrieb konventioneller Kälteanlagen abgefangen werden. Dies ist bei Kühlschiffen oder großen Passagierschiffen der Fall. Bei kleinen Küstenschiffen, vornehmlich Frachter, ist dies nicht anwendbar, da es keine ausreichende Grundlast an Kältebedarf gibt.

Weitere Vorschläge beziehen sich auf die Möglichkeit, Wärme an Bord zu speichern, um sie bei Bedarf (z.B. im Hafen) nutzen zu können. Exemplarisch seien DE 10 2009 034 772 A1 oder das EU-Forschungsvorhaben LeanShip genannt:
https://www.youtube.com/watch?v=v04uNdgP9pg

Eine solche Wärmespeicherung macht aber nur Sinn, wenn es Zeiten gibt, in denen an Bord keine oder nicht ausreichend Wärme erzeugt werden kann. Nach Erfahrung des Anmelders trifft dies aber nur auf einige Schiffstypen zu. Bei kleinen Schiffen in der Küstenfahrt, die meist in entsprechend kleinen Häfen anlegen, laufen im Hafen die Hilfsdiesel und erzeugen immer noch ausreichend Abwärme, um die Hafenliegezeiten zu überbrücken, insbesondere wenn durch moderne Isoliermaterialen der Nachheizbedarf entsprechend klein gehalten wird.

Die Erfahrung des Anmelders zeigt, dass alle bisher vorgeschlagenen Lösungen zur Nutzung der Abwärme für eine ganze Reihe von Schiffen mit kleinen Motorleistungen (z.B. Küstenfrachter mit Hauptmotoren <4MW) nicht anwendbar sind. In aktuellen Entwürfen wird deshalb auf die Nutzung der Abwärme aus dem Abgasstrang verzichtet. Davon ausgehend liegt der Erfindung die Aufgabe zugrunde, ein Schiff und ein Verfahren zu schaffen, das eine bessere Nutzung der Wärme aus dem Abgas des Antriebsmotors ermöglicht.

Die Aufgabe wird durch ein Schiff gemäß Anspruch 1 und durch ein Verfahren gemäß Anspruch 13 gelöst. Vorteilhafte Ausgestaltungen des erfindungsgemäßen Schiffes und des erfindungsgemäßen Verfahrens sind in Unteransprüchen angegeben.

Das erfindungsgemäße Schiff umfasst mindestens einen als Verbrennungsmotor ausgebildeten Antriebsmotor, mindestens einen Wärmespeicher, eine Einrichtung zum Übertragen von Wärme aus dem Abgas des Antriebsmotors auf den Wärmespeicher und eine Einrichtung zur Abgabe der in dem Wärmespeicher gespeicherten Wärme an Land oder einen anderen Ort außerhalb des Schiffes zur weiteren Nutzung.

Bei dem erfindungsgemäßen Verfahren zur Nutzung der Abwärme eines Schiffes mit mindestens einem als Verbrennungsmotor ausgebildeten Antriebsmotor wird die Wärme aus dem Abgas des Antriebsmotors in einem Wärmespeicher gespeichert und von Bord des Schiffes an Land oder an einen anderen Ort außerhalb des Schiffes zur weiteren Nutzung abgegeben.

Das erfindungsgemäße Schiff ermöglicht die Speicherung von Abwärme aus den Abgasen des Antriebsmotors an Bord des Schiffes und die Abgabe der gespeicherten Wärme an Land oder an einen anderen Ort außerhalb des Schiffes. Mit der Wärme im Abgas wird die Wärme mit dem höchsten Temperaturniveau (ca. 250 - 350 °C) und damit dem höchsten Potenzial zur Abwärmenutzung genutzt. Die Abgabe der Wärme erfolgt beispielsweise in einem Hafen zur Nutzung durch einen dort gelegenen Verbraucher oder für den Weitertransport durch ein Landfahrzeug an einen Nutzer an einem anderen Ort. Die Wärmeabgabe kann auch auf See an einen Verbraucher auf einem anderen Schiff oder auf einem Offshore-Bauwerk (z. B. einer Förderplattform) erfolgen. Erfindungsgemäß wird somit der Fokus von der Nutzung an Bord auf die Speicherung der während der Fahrt erzeugten Abwärme für die spätere Wärme an Land oder einen anderen Ort außerhalb des Schiffes verschoben.

Gemäß einer Ausführungsart der Erfindung ist der Wärmespeicher ein Latentwärmespeicher, ein thermochemischer Wärmespeicher oder ein sensibler Wärmespeicher. Latentwärmespeicher sind Wärmespeicher, welche die Phasenumwandlungsenergie für die Wärmespeicherung nutzen. Bekannt sind beispielsweise Latentwärmespeicher mit Salzlösungen, die bei einer Temperatur von 250 - 280 °C arbeiten. Thermochemische Wärmespeicher speichern Wärme durch endotherme Reaktionen und geben sie durch exotherme Reaktionen wieder ab. Beispiele hierfür sind thermochemische Wärmespeicher mit Metallhydriden oder Zeolithen, die durch Zufuhr von Wärme getrocknet werden und bei Anlagerung von Wasser Wärme freisetzen. Sensible Wärmespeicher verändern beim Lade- oder Entladevorgang ihre "fühlbare" Temperatur, ohne eine Phasenumwandlung zu durchlaufen.

Gemäß einer weiteren Ausführungsart umfasst das Schiff einen Hilfsdiesel oder anderen Verbrennungsmotor zur Stromerzeugung und eine Einrichtung zum Übertragen von Wärme aus dem Abgas des Hilfsdiesels an den Wärmespeicher. Hierdurch wird zusätzlich auch die Abwärme eines Verbrennungsmotors zur Stromerzeugung genutzt.

Gemäß einer weiteren Ausführungsart umfasst das Schiff eine Einrichtung zum Übertragen von Wärme aus dem Kühlwasserkreislauf des Antriebsmotors und/oder des Hilfsdiesels oder anderen Verbrennungsmotors zur Stromerzeugung auf den Wärmespeicher. Hierdurch wird zusätzlich Wärme aus dem Kühlwasserkreislauf genutzt.

Gemäß einer weiteren Ausführungsart ist die Einrichtung zum Übertragen der Wärme vom Abgas oder vom Kühlwasserkreislauf auf den Wärmespeicher ein Wärmeträgerzwi schenkrei s.

Gemäß einer weiteren Ausführungsart umfasst das Schiff eine Einrichtung zum Übertragen eines Teils der Wärme aus dem Wärmespeicher an mindestens einen Verbraucher an Bord des Schiffes. Gemäß einer weiteren Ausführungsart ist die Einrichtung zum Übertragen von Wärme an einen Verbraucher an Bord des Schiffes ein weiterer Wärmeträgerzwischenkreis.

Gemäß einer weiteren Ausführungsart umfasst die Einrichtung zum Übertragen von Wärme aus dem Abgas auf den Wärmespeicher einen Reaktor im Abgasstrang des Antriebsmotors und gegebenenfalls des Hilfsdiesels, der ausgebildet ist, ein Wärmespeichermedium direkt in Kontakt mit dem Abgas zu bringen und aufzuheizen, und ist die Einrichtung zur Abgabe der in dem Wärmespeicher gespeicherten Wärme an einen Ort außerhalb des Schiffes ein pneumatischer Förderer, ein Bandförderer oder eine andere Fördereinrichtung zum Transportieren des Wärmespeichermediums - vorzugsweise ein thermochemisches Wärmespeichermedium - vom Reaktor an den Ort außerhalb des Schiffes.

Gemäß einer weiteren Ausführungsart ist der Wärmespeicher in einen Container, einen Trailer oder eine andere mobile Einheit integriert, die auf einem Lagerplatz an Bord des Schiffes gelagert ist, wobei die Einrichtung zum Übertragen von Wärme aus dem Abgas auf den Wärmespeicher ausgebildet ist, der mobilen Einheit auf dem Lagerplatz die Wärme zuzuführen, wobei die mobile Einheit als Einrichtung zur Abgabe der in dem Wärmespeicher gespeicherten Wärme vom Lagerplatz weg an einen Ort außerhalb des Schiffes verlagerbar ist. Ein Container, Trailer oder eine andere mobile Einheit kann leicht mittels vorhandener Infrastruktur in einem Hafen von oder an Bord gebracht werden.

Gemäß einer weiteren Ausführungsart ist der Wärmespeicher fest an Bord des Schiffes installiert und ist die Einrichtung zur Abgabe der in dem fest an Bord des Schiffes installierten Wärmespeichers gespeicherten Wärme an einen Ort außerhalb des Schiffes ein Wärmeträgerzwischenkreis mit einem Bunkeranschluss auf einem Oberdeck, der Außenseite des Schiffsrumpfes oder an einer anderen, von außen zugänglichen Stelle an Bord des Schiffes. Hierdurch kann gespeicherte Wärme aus einem fest auf dem Schiff installierten Wärmespeicher einfach auf einen anderen Ort außerhalb des Schiffes übertragen werden.

Gemäß einer weiteren Ausführungsart ist das Schiff ein Containerschiff oder ein Frachtschiff, ein Bulker oder ein Tanker. Aufgrund der bei diesen Schiffstypen gegebenen Lagerungsmöglichkeiten für Wärmespeicher und der vorhandenen Infrastruktur zur Beladung und Entladung dieser Schiffe sind diese besonders gut für die erfindungsgemäße Nutzung der Abwärme geeignet.

Die Erfindung nutzt ähnliche Konzepte, wie sie an Land bereits angedacht oder genutzt werden, z.B. DE 10 2014 223 402 A1, DE 20 2009 001 751 U1, DE 20 2009 001 751 U1, FR 2 742 218 A1, DE 10 2014 103 108, DE 25 48 715 A1 oder :
https://eneff-industrie.info/projekte/2015/waerme-faehrt-mit-dem-sattelschlepperzum-abnehmer/
und adaptiert sie, um den Hauptmotor eines Schiffes als Wärmequelle kommerziell nutzbar zu machen. Der große Vorteil bei dieser neuartigen Kombination ist, dass das Schiff nicht nur als mögliches Transportmittel für erzeugte Wärme dient, sondern Wärmeerzeuger und Transportmittel zugleich ist.

Hierin grenzt sich die Erfindung auch von DE 199 22 696 A1 ab, dem der Erfindung vermutlich am nächsten kommenden Stand der Technik. In DE 199 22 696 A1 wird in einer Ausgestaltung vorgeschlagen, die Abwärme der Kraftmaschinen des Transportmittels zum Ausgleich der Wärmeverluste des Transportgefäßes von gespeicherter Wärme zu nutzen. Offensichtlich wird dabei an Kühlwasserwärme gedacht, da ein Temperaturniveau von ca. 90°C angegeben wird. Es wird jedoch nicht erkannt, dass die Leistung von Schiffsverbrennungsmotoren und das Temperaturniveau, dass im Abgasstrang vorherrscht (ca. 300°C) selbst das Potential einer Wärmequelle für die Generation verkäuflicher Wärme haben.

So generiert z.B. ein typischer Holzfrachter, wie er in der Ostsee zur Versorgung von Papiermühlen genutzt wird in einem Umlauf (Papiermühle-Holzladehafen-Papiermühle) ca. 14MWh Wärme, die gespeichert und dann an die Papiermühle zur Nutzung verkauft werden könnte.

Da der Verkauf der Wärme nur ein Nebenprodukt der eigentlichen Anwendung des Schiffes als Transportmittel ist, muss die Infrastruktur zur Speicherung der Wärme und deren Abgabe an Land den Bedingungen an Bord so angepasst werden, dass Sie die Hauptaufgabe des Schiffes nicht kompromittieren und keine erheblichen Investitionskosten verursachen. In Ausgestaltungen der Erfindung sind deshalb vornehmlich Latentwärmespeicher (Phasenwechselspeicher, PCM) und thermochemische Speicher zu bevorzugen. In einzelnen Fällen wird es gelingen, sensible Wärmespeicher sinnvoll anzuwenden, sofern deren Energiedichte ausreicht.

Ausführungsbeispiele der Erfindung werden nachfolgend anhand der anliegenden Zeichnungen erläutert. In den Zeichnungen zeigen:

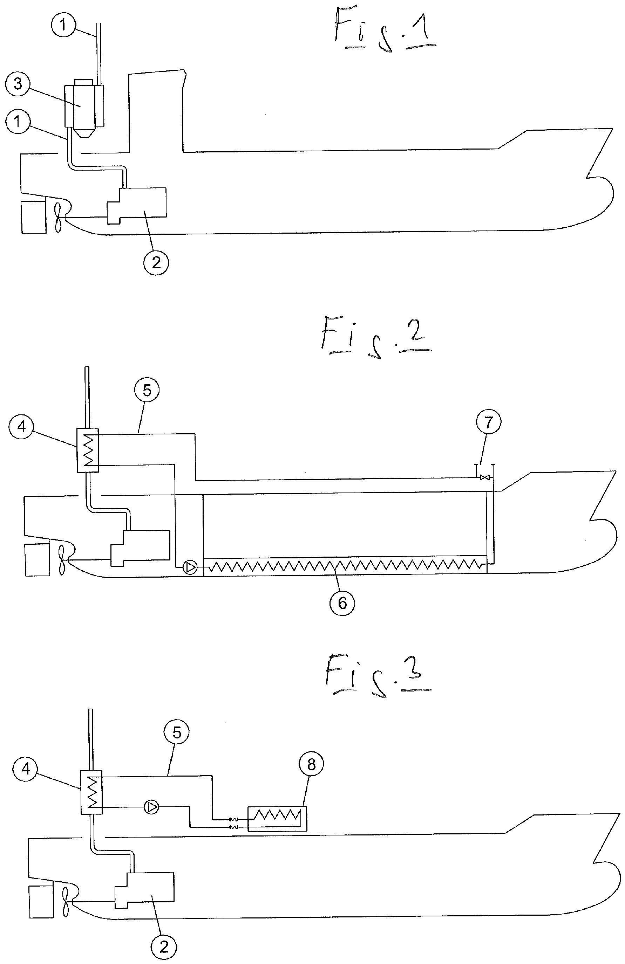

- Fig. 1: ein Schiff mit einem thermochemischen Speicher mit einem an Land abgebbaren Wärmespeichermedium in einem Längsschnitt;
- Fig. 2: ein Schiff mit einem Wärmespeicher im Doppelboden in einem Längsschnitt;
- Fig. 3: ein Schiff mit einem Wärmespeicher in einem mobilen Behälter in einem Längsschnitt.

Für das vorgenannte Beispiel des Holzfrachters kann z.B. in einer Ausgestaltungsmöglichkeit im Abgasstrang 1 des Hauptmotors 2, ggf. auch der Hilfsdiesel, ein thermochemischer Speicher, wie z.B. Zeolith in einem Reaktor 3, wie er z.B. durch die Firma Couple Systems für deren Trockenscrubber DryEGCS, siehe
https://www.egcsa.com/wp-content/uploads/Couple-Systems-EGCS-SMM-Workshop-2010.pdf,
entwickelt wurde gelagert werden. Während der Fahrt wird der Wärmespeichermedium thermisch geladen (Trocknung des Zeoliths durch die Wärme im Abgas), um dann im Zielhafen an Land gegeben zu werden (z.B. pneumatisch, per Druckluft) bzw. mit thermisch entladenem Wärmespeichermedium (feuchtes Zeolith) ausgetauscht zu werden. Statt thermochemischer Speicher, wie Zeolith, wären auch Latentwärmespeicher, z.B. auf Basis von Metallhybriden möglich.

In einer anderen Ausgestaltungsmöglichkeit wird die Abwärme des Motors über einen konventionellen Abgaskessel 4 mit Hilfe von Dampf oder Thermalöl ausgekoppelt (Wärmeträgerzwischenkreis, 5) und dann zu einem sinnvoll im Schiff angeordneten Wärmespeicher 6 gebracht. Dies kann im Falle des vorgenannten Holzfrachters oder eines Containerschiffes ein Wärmespeicher im Doppelboden sein, da solche Schiffe i.d.R. permanent Ballast aus Stabilitätsgründen mit sich führen und somit das übliche Ballastwasser durch das Wärmespeichermedium ersetzt wird. Als Wärmespeicher kämen hier vorzugsweise Latentwärmespeicher, wie Saltlösungen in Frage, aber auch sensitive Speicher wären denkbar. Die Übergabe der Wärme aus dem Wärmespeicher an Land erfolgt dabei mit Hilfe des gleichen oder eines zweiten Wärmeträgerzwischenkreises über einen Bunkeranschluß 7.

Eine andere Ausgestaltungsmöglichkeit wäre, den Wärmespeicher in einem mobilen Behälter 8 an Bord zu stauen (z.B. einen Container bei Containerschiffen oder einem Trailer bei RoRo- oder Fährschiffen). Die Aufladung (Erwärmung) des Wärmespeichers während der Fahrt erfolgt dabei entweder über einen Wärmeträgerzwischenkreis 5 oder direkt über das Abgas. Im Zielhafen kann der komplette Wärmespeicher von Bord gegeben und durch einen abgekühlten Wärmespeicher ersetzt werden. Diese Lösung bietet sich besonders bei Containerschiffen und Fährschiffen an, da die vorhandene Infrastruktur zum Be- und Entladen der Schiffe im Zielhafen auch für die Übergabe der gespeicherten Wärme genutzt werden kann. Insbesondere große Fährschiffe auf kurzen Strecken, wie in der Ostsee oder im Mittelmeer üblich, können dank ihrer großen Maschinenleistung während einer kurzen Überfahrt genug Abwärme erzeugen, um einen einzelnen Wärmespeichertrailer aufzuladen. Auf diesem Wege kann ein regelmäßiger Fährdienst eine ständige Wärmeversorgung für einen Verbraucher an Land sicherstellen.

## Patentansprüche

1. Schiff umfassend mindestens einen als Verbrennungsmotor ausgebildeten Antriebsmotor, mindestens einen Wärmespeicher, eine Einrichtung zum Übertragen von Wärme aus dem Abgas des Antriebsmotors auf den Wärmespeicher und eine Einrichtung zur Abgabe der in dem Wärmespeicher gespeicherten Wärme an Land oder einen anderen Ort außerhalb des Schiffes zur weiteren Nutzung.

2. Schiff nach Anspruch 1, bei dem der Wärmespeicher ein Latentwärmespeicher, ein thermochemischer Wärmespeicher oder ein sensibler Wärmespeicher ist.

3. Schiff nach Anspruch 1 oder 2, umfassend mindestens einen Hilfsdiesel oder anderen Verbrennungsmotor zur Stromerzeugung und eine Einrichtung zum Übertragen von Wärme aus dem Abgas des Hilfsdiesels an den Wärmespeicher.

4. Schiff nach einem der Ansprüche 1 bis 3 umfassend eine Einrichtung zum Übertragen von Wärme aus dem Kühlwasserkreislauf des Antriebsmotors und/oder des Hilfsdiesels oder anderen Verbrennungsmotor zur Stromerzeugung auf den Wärmespeicher.

5. Schiff nach einem der Ansprüche 1 bis 4, bei dem die Einrichtung zum Übertragen der Wärme vom Abgas oder vom Kühlwasserkreislauf auf den Wärmespeicher ein Wärmeträgerzwischenkreis ist.

6. Schiff nach einem der Ansprüche 1 bis 5 umfassend eine Einrichtung zum Übertragen eines Teils der Wärme aus dem Wärmespeicher an mindestens einen Verbraucher an Bord des Schiffes.

7. Schiff nach Anspruch 6, bei dem die Einrichtung zum Übertragen von Wärme an einen Verbraucher an Bord des Schiffes ein weiterer Wärmeträgerzwischenkreis ist.

8. Schiff nach einem der Ansprüche 1 bis 7, bei dem die Einrichtung zum Übertragen von Wärme aus dem Abgas auf den Wärmespeicher einen Reaktor im Abgasstrang des Antriebsmotors und ggfs. des Hilfsdiesels umfasst, der ausgebildet ist, ein Wärmespeichermedium direkt in Kontakt mit dem Abgas zu bringen und aufzuheizen, und die Einrichtung zur Abgabe der in dem Wärmespeicher gespeicherten Wärme an einen Ort außerhalb des Schiffes ein pneumatischer Förderer, ein Bandförderer oder eine andere Fördereinrichtung zum Transportieren des Wärmespeichermediums - vorzugsweise ein thermochemisches Wärmespeichermedium - vom Reaktor an den Ort außerhalb des Schiffes ist.

9. Schiff nach einem der Ansprüche 1 bis 7, bei dem der Wärmespeicher in einen Container, einen Trailer oder eine andere mobile Einheit integriert ist, die auf einem Lagerplatz an Bord des Schiffes gelagert sind, wobei die Einrichtung zum Übertragen von Wärme aus dem Abgas auf den Wärmespeicher ausgebildet ist, der mobilen Einheit auf dem Lagerplatz die Wärme zuzuführen, wobei die mobile Einheit als Einrichtung zur Abgabe der in dem Wärmespeicher gespeicherten Wärme vom Lagerplatz weg an einen Ort außerhalb des Schiffes verlagerbar ist.

10. Schiff nach einem der Ansprüche 1 bis 7, bei dem der Wärmespeicher fest an Bord des Schiffes installiert ist und das über eine Einrichtung zur Abgabe der in dem fest an Bord des Schiffes installierten Wärmespeicher gespeicherten Wärme an einen Ort außerhalb des Schiffes verfügt, die ein Wärmeträgerzwischenkreis mit einem Bunkeranschluss auf einem Oberdeck, der Außenseite des Schiffsrumpfes oder an einer anderen, von außen zugänglichen Stelle an Bord des Schiffes ist.

11. Schiff nach Anspruch 9, das ein Containerschiff oder ein Fährschiff ist.

12. Schiff nach Anspruch 8 oder 10, das ein Bulker oder ein Tanker ist.

13. Verfahren zur Nutzung der Abwärme eines Schiffes mit mindestens einem als Verbrennungsmotor ausgebildeten Antriebsmotor, bei dem die Wärme aus dem Abgas des Antriebsmotors in einem Wärmespeicher gespeichert und von Bord des Schiffes an Land oder einen anderen Ort außerhalb des Schiffes zur weiteren Nutzung abgegeben wird.

14. Verfahren nach Anspruch 13, bei dem der Wärmespeicher ein Latentwärmespeicher, ein thermochemischer Wärmespeicher oder ein sensibler Wärmespeicher ist.

15. Verfahren nach Anspruch 13 oder 14, bei dem neben der Wärme aus dem Abgas des Antriebsmotors auch die Wärme aus dem Abgas mindestens eines Hilfsdiesels oder anderen Verbrennungsmotors an Bord des Schiffes zur Stromerzeugung im Wärmespeicher gespeichert wird.

16. Verfahren nach einem der Ansprüche 13 bis 15, bei dem neben der Wärme aus dem Abgas auch die Wärme aus dem Kühlwasserkreislauf des Verbrennungsmotors und gegebenenfalls des Hilfsdiesels im Wärmespeicher gespeichert wird.

17. Verfahren nach einem der Ansprüche 13 bis 16, bei dem die Wärme vom Abgas oder vom Kühlwasserkreislauf mittels eines Wärmeträgerzwischenkreises auf den Wärmespeicher übertragen wird.

18. Verfahren nach einem der Ansprüche 13 bis 17, bei dem ein Teil der gespeicherten Wärme aus dem Wärmespeicher an mindestens einen Verbraucher an Bord des Schiffes übertragen wird.

19. Verfahren nach Anspruch 18, bei dem ein Teil der Wärme aus dem Wärmespeicher über einen weiteren Wärmeträgerzwischenkreis an mindestens einen Verbraucher an Bord des Schiffes übertragen wird.

20. Verfahren nach einem der Ansprüche 13 bis 19, bei dem das Wärmespeichermedium direkt in Kontakt mit dem Abgas gebracht und durch dieses aufgeheizt wird und das Wärmespeichermedium - vorzugsweise ein thermochemisches Speichermedium - direkt zur weiteren Nutzung an einen Ort außerhalb des Schiffes transportiert wird.

21. Verfahren nach einem der Ansprüche 13 bis 19, bei dem ein Container, Trailer oder eine andere mobile Einheit mit integriertem Wärmespeicher an Bord gelagert wird, Wärme aus dem Abgas des Antriebsmotors und gegebenenfalls des Hilfsdiesels in dem Wärmespeicher gespeichert wird und die mobile Einheit für die weitere Nutzung der gespeicherten Wärme an einen Ort außerhalb des Schiffes verbracht wird.

22. Verfahren nach Anspruch 21, bei dem die Wärme des Abgases über einen Wärmeträgerzwischenkreis auf den Wärmespeicher der mobilen Einheit übertragen wird.

23. Verfahren nach einem der Ansprüche 13 bis 19, bei dem die Wärme des Abgases auf einen fest an Bord des Schiffes installierten Wärmespeicher übertragen wird und die im Wärmespeicher gespeicherte Wärme an einen Ort außerhalb des Schiffes übertragen wird.

24. Verfahren nach Anspruch 23, bei dem die Wärme aus dem fest installierten Wärmespeicher über einen weiteren Wärmeträgerzwischenkreis an eine von außerhalb des Schiffes zugängliche Stelle an Bord des Schiffes übertragen wird.
